# EUROPEAN PATENT APPLICATION

(11) **EP 2 230 588 A1**
(43) Date of publication of application: **22.09.2010**
(21) Application number: 08870479.6
(22) Date of filing: 17.12.2008
(51) Int. Cl.: G06F 3/048, H04M 1/00, H04M 11/00

(54) **COMMUNICATION TERMINAL AND PROGRAM**

(30) Priority: 07.01.2008 JP 2008000644
(71) Applicant: NTT DoCoMo, Inc., Chiyoda-ku Tokyo 100-6150 (JP)
(72) Inventor: KANO, Izua, Tokyo 100-6150 (JP); YAMADA, Kazuhiro, Tokyo 100-6150 (JP); KAMIYA, Dai, Tokyo 100-6150 (JP); ONDA, Yasushi, Tokyo 100-6150 (JP); MURAKAMI, Keiichi, Tokyo 100-6150 (JP)
(74) Representative: HOFFMANN EITLE
(86) International application number: PCT/JP2008/072956
(87) International publication number: WO 2009/087873

(57) **Abstract**

A communication terminal stores charge information representing the charge schemes (usage-based billing, flat-rate billing, etc.) of the terminal. In addition, for each charge information item, the communication terminal stores priority information representing the display priority of the windows. The communication terminal identifies the charge schemes by reading the charge information (Sa1) and identifies the priority information to be used for reference based on the identified charge scheme (Sa2). When there are multiple windows displayed with overlaps (Sa4: "YES"), the communication terminal determines the priority level of the screen views based on identifying the priorities of the respective overlapping windows (Sa6), and, based on this, re-arranges the display sequence (Sa8). Thus, the present invention can permit re-arrangement of displays of multiple windows according to communication conditions.

## Description

### Background

### Technical Field

The present invention relates to a GUI (Graphical User Interface).

### Related Art

A technology used for display control over multiple overlapping windows is known to have been described in JP H08-161139A (hereinafter referred to as "Patent Document 1"). According to the description of Patent Document 1, when at least two windows are displayed on a display screen such that they have overlapping portions, the window displayed in the foreground is interchanged with the window(s) displayed in the background at predetermined time periods, and the length of time, during which windows are displayed in the foreground, is determined by the duration of use of the respective windows.

Incidentally, when a display of windows is accompanied by communication, the choice of windows most suitable for the user may vary according to communication conditions. For example, when the speed of communication is relatively low, windows that display large volumes of content require more time for reading and re-writing display contents, which may be stressful for the user. Moreover, it can be said that it is more expedient to display such windows when telecommunication charges are lower. In mobile communications, in particular, it is commonplace for such communication conditions to change.

### Summary

### Problem to be Addressed by the Invention

Therefore, it is an object of the present invention to permit re-arrangement of displays of multiple windows according to communication conditions.

### Means for Addressing the Problem

The communication terminal according to the present invention includes: a condition identification section that identifies communication-related conditions for the terminal; a storage section that stores, for each window displayed on a display, priorities determined according to the conditions; a window identification section that identifies a window overlapping with another window in screen views displayed on the display; a determination section that determines the priority levels of screen views for the multiple windows identified by the window identification section, the determination section determining the priority levels of the multiple windows based on the priorities stored in the storage section and according to the conditions identified by the condition identification section; and, a display controller that displays windows with a higher priority level, as determined by the determination section, in front of windows with a lower priority level.

The communication terminal according to the present invention may be configured such that the condition identification section identifies, as the condition, the volume of communication traffic that can be communicated by the terminal per predetermined time period, and the storage section stores, for each one of the windows, priorities corresponding to the volume of communication traffic associated with each one of the views.

Alternatively, it may be configured such that the condition identification section identifies, as the condition, the relationship between a volume of communication traffic of the terminal and a charge for the terminal, and the storage section stores, for each one of the windows, priorities corresponding to the volume of communication traffic associated with each one of the views.

Furthermore, in such a case, a configuration can be used that includes: a communication traffic volume identification section that identifies, for each one of the windows, the volume of communication traffic associated with each one of the views; a computation section that computes priorities for each of the conditions based on the volume of communication traffic identified by the communication traffic volume identification section; and a storage controller that stores the priorities computed by the computation section in the storage section.

The communication terminal according to the present invention may be configured such that a designation section that designates a certain window is provided and, when the window designated by the designation section is included among the multiple windows identified by the window identification section, the display controller displays said window in the foremost position.

A program according to the present invention that causes a computer executes the steps of: identifying communication-related conditions; acquiring, for each window displayed on a display, priorities determined according to the conditions; identifying a window overlapping with another window in screen views displayed on the display; determining the priority level of the views of the multiple identified windows, said function determining the priority levels of the multiple windows based on the priorities acquired according to the identified conditions; and displaying windows having a higher determined priority level in front of windows having a lower priority level.

### Effects of the Invention

The present invention makes it possible to re-arrange displays of multiple windows according to communication conditions.

### Brief Description of the Drawings

FIG. 1 is a block diagram showing the configuration of a mobile communication terminal of the present invention.
FIG. 2 is a diagram showing the logical configuration of the mobile communication terminal.
FIG. 3 is a diagram illustrating priority information.
FIG. 4 is a flow chart showing the operation of the mobile communication terminal.
FIG. 5(a) and FIG. 5(b) are diagrams illustrating screen views of windows.
FIG. 6(a) and FIG. 6(b) are diagrams illustrating screen views of windows.
FIG. 7 is a flow chart showing the operation of the mobile communication terminal.
FIG. 8 is a diagram illustrating screen views of windows.
FIG. 9 is a diagram illustrating screen views of windows.

### Explanation of Reference Numerals

100: Mobile communication terminal
11: Controller
12: Wireless communication section
13: Operator input section
14: Display
15: Audio output section

### Best Mode for Carrying Out the Invention

An exemplary embodiment of the present invention is explained below with reference to drawings.

### Configuration of the Exemplary Embodiment

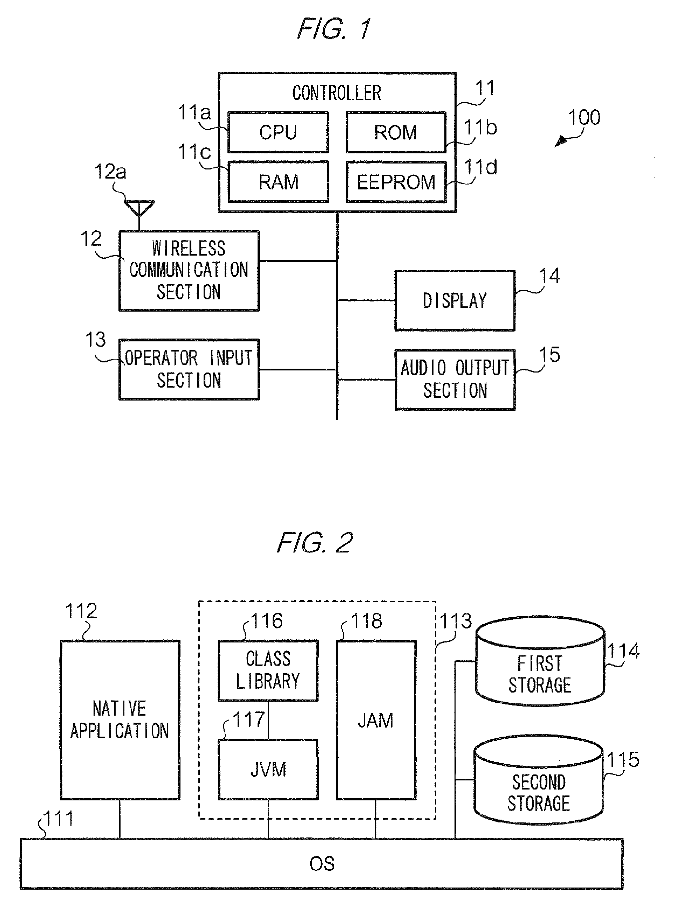

FIG. 1 is a block diagram illustrating the overall configuration of a mobile communication terminal according to an exemplary embodiment of the present invention. As illustrated in the same figure, a mobile communication terminal 100 includes a controller 11, a wireless communication section 12, an operator input section 13, a display 14, and an audio output section 15. In the present exemplary embodiment it is assumed that the mobile communication terminal 100 is a cellular telephone.

The controller 11 includes a CPU (Central Processing Unit) 11a, a ROM (Read-only Memory) 11b, a RAM (Random Access Memory) 11c, and an EEPROM (Electronically Erasable and Programmable ROM) 11d. The CPU 11a uses the RAM 11c as a work area to run software programs stored in the ROM 11b and EEPROM 11d, thereby controlling the operation of various components of the mobile communication terminal 100. The wireless communication section 12 includes an antenna 12a and effects wireless data communication with a predetermined mobile communications network. In addition, it is assumed that the user of the mobile communication terminal 100 has signed a contract with a telecommunication service provider (so-called "carries") managing the mobile communications network regarding the use of the mobile communications network and is paying prescribed fees. The operator input section 13, which includes controls, such as buttons, etc., supplies operator input signals corresponding to user input to the controller 11. The display 14, which includes a liquid crystal display and a liquid crystal drive circuit, displays images corresponding to display data supplied by the controller 11. The audio output section 15, which includes an amplifier and speakers, plays back audio corresponding to audio data.

The ROM 11b has several programs pre-stored therein. Below, they are referred to as "pre-installed programs". Specifically, the pre-installed programs include programs such as a multi-task operating system (hereinafter referred to as a "multi-tasking OS"), a Java® platform, and a native application. The multi-tasking OS is an operating system supporting various functions, such as allocation of virtual memory space required for implementing TSS (Time-Sharing System)-based pseudo-parallel execution of multiple tasks. The Java platform is a group of programs described in accordance with the CDC (Connected Device Configuration), which is a configuration used to implement the hereinafter-described Java Runtime Environment 114 on the mobile communication terminal 100 having the multi-tasking OS installed thereon. The native application is a program that implements basic services such as telephone calls, etc. on the mobile communication terminal 100.

The EEPROM 11d has a Java application storage area where Java applications are stored. The Java applications have JAR (Java Archive) files, wherein actual programs describing processing procedures under the Java Runtime Environment are bundled together with audio files and image files used in conjunction with the execution of the programs, and ADFs (Application Descriptor File), which provide a description of the installation, startup and various attributes of the JAR files. Such Java applications are written by a content provider or by a telecommunication service provider, stored on external server equipment etc., and downloaded from the server equipment as needed in response to requests from the mobile communication terminal 100.

FIG. 2 shows the logical configuration of the components implemented by the controller 11 of the mobile communication terminal 100 by executing the various programs stored in the ROM 11b and EEPROM 11d. As illustrated in the same figure, the mobile communication terminal 100, which runs various programs, has a native application 112 and a Java Runtime Environment 113 implemented in an OS 111, and, in addition, a first storage 114 and a second storage 115 are provided in the EEPROM 11d.

The Java Runtime Environment 113 is implemented using the Java platform of the ROM 11b. The Java Runtime Environment 113 includes a Class Library 116, a JVM (Java Virtual Machine) 117, and a JAM (Java Application Manager) 118. The Class Library 116 is obtained by bundling a group of program modules (classes) with specific functionality into a single file. The JVM 117, which is a Java Runtime Environment optimized for the above-mentioned CDC, has a function for interpreting and running bytecode supplied in the form of Java applications. The JAM 118 has a function for managing the downloading, installation, startup, shutdown etc. of Java applications.

The first storage 114 is an area used for storing Java applications (Jar files and ADFs) downloaded under the management of the JAM 118. The second storage 115 is an area used for storing data that is produced during execution of the Java applications after their shutdown, with individual storage areas allocated to each installed Java application. In addition, data in storage areas allocated to particular Java applications can be re-written only when the Java applications are running and other Java applications cannot perform any rewrites.

The mobile communication terminal 100 of the present exemplary embodiment has three game applications stored in the EEPROM 11d as Java applications. Below, these applications are referred to as "Game A", "Game B", and "Game C". By communicating with identical applications implemented on other mobile communication terminals via a mobile communications network, these applications display windows and implement competitive games. It should be noted that these applications differ in the volume of communication traffic handled per predetermined time period during the games, with "Game A" having the largest volume of communication traffic and "Game C" having the smallest volume of communication traffic. This is due, for instance, to the fact that "Game A" plays back audio and displays video at a higher level of resolution than the other games.

It should be noted that the volume of communication traffic per predetermined time period for each application is described in the ADFs mentioned above. In addition, as used herein, the term "predetermined time period" refers to any period as long as it has a fixed length.

Moreover, the EEPROM 11d stores charge information, i.e. information concerning the contents of the contract signed between the user of the mobile communication terminal 100 and a telecommunication service provider. In the present exemplary embodiment, the charge information represents either a "flat-rate billing system" or a "usage-based billing system". The system to be used is determined in advance by the user in the contract. As used herein, the term "flat-rate billing system" refers to a charge scheme, in which the telecommunication charges per predetermined period of time (for instance, per month) are fixed and independent of the volume of communication traffic. Moreover, the term "usage-based billing system" refers to a charge scheme, in which the telecommunication charges per predetermined period of time increase in response to an increase in the volume of communication traffic. It should be noted that it is assumed that telecommunication charges incurred for the same volume of communication traffic under the "flat-rate billing system" are lower than under the "usage-based billing system". In other words, the "flat-rate billing system" is a charge scheme, under which a large volume of communication traffic is relatively cheaper than under the "usage-based billing system".

In addition, for each one of the windows-displaying gaming applications, the EEPROM 11d stores priorities determined for each charge information item as priority information.

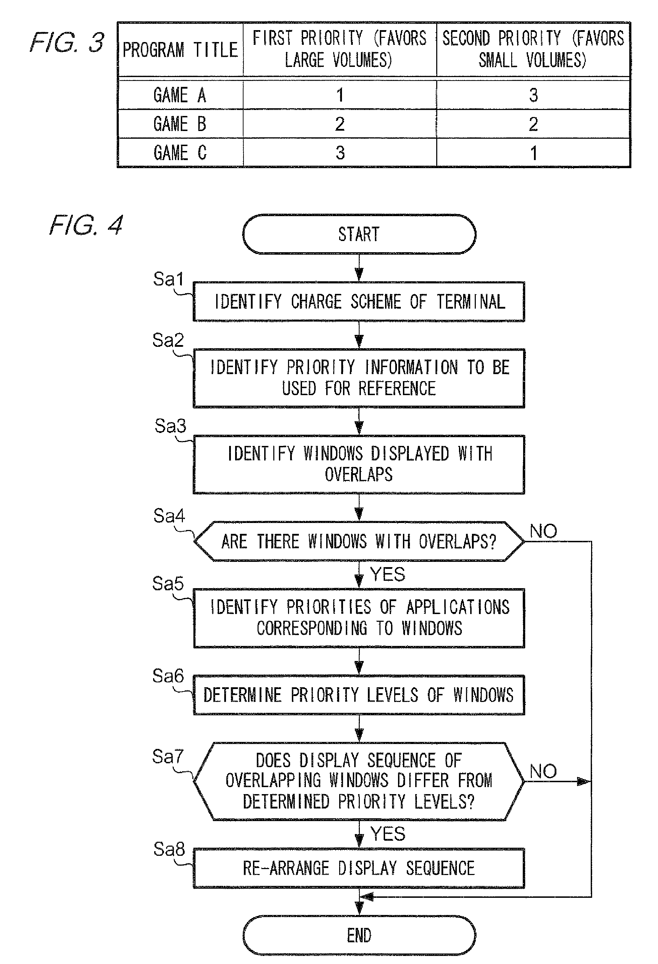

FIG. 3 is a diagram illustrating priority information. As shown in the same figure, the priority information describes "First Priority" and "Second Priority" for each respective application (program title). As used herein, the term "first priority" refers to priority assigned when favoring the windows of applications handling larger volumes of communication traffic and the term "second priority" refers to priority assigned when favoring the windows of applications handling smaller volumes of communication traffic. It should be noted that the "first priority" and "second priority" are numerical values respectively assigned to applications, for which priority information is described, such that there is no mutual overlap, and a smaller value means a higher priority. Namely, the example illustrated in FIG. 3 shows that the game with the highest "first priority" is "Game A" and the game with the highest "second priority" is "Game C".

In addition, in the present exemplary embodiment, the term "window" refers to a display area allocated to an application when the application implements predetermined functions. As used herein, these display areas may be of any shape and appearance and need not be of the window type (square-shaped). For ease of description, however, all of them are assumed to be rectangular in the drawings shown below. Moreover, when a window is displayed overlapped by another window in front of it, only the other window in the foreground is displayed in the overlap portion and the display area overlapped by the other window is not displayed. Below, the position of a window, part of which is caused to be undisplayed in this manner by a window located in front of it, is referred to as "background" relative to the foreground.

### Operation of the Exemplary Embodiment

The configuration of the mobile communication terminal 100 is as described above. Based on this configuration, the mobile communication terminal 100 runs multiple applications in response to user requests. At such time, the user performs prescribed operations on the operator input section 13 to request that an application be executed by the mobile communication terminal 100.

When running multiple applications, the mobile communication terminal 100 can display multiple windows corresponding to the respective applications. At such time, the mobile communication terminal 100 displays the windows using the so-called overlapped windowing technique. Namely, in response to user instructions, the mobile communication terminal 100 can shift the display positions of the windows, which makes it possible to display the multiple windows in an overlapped fashion. In order to do this, the controller 11 of the mobile communication terminal 100 stores information (hereinafter referred to as "window information") concerning the position and sequence, in which the multiple windows are displayed, with this information updated whenever the windows shift. It should be noted that, as used herein, the term "window display sequence" refers to the order, in which the windows would be counted starting from the foremost window. Moreover, when multiple windows are overlapped, the mobile communication terminal 100 promotes recently activated (manipulated) windows closer to the foreground. Accordingly, the window displayed in the foremost position is the presently active window.

When windows are displayed with overlaps, the mobile communication terminal 100 determines the display priority of each window based on communication-related conditions for the terminal and priority information. Specifically, the mobile communication terminal 100 executes the operations illustrated in Operating Examples 1 or 2 below. It should be noted that the mobile communication terminal 100 may execute either only one of the Operating Examples 1 and 2 or, if necessary, a combination thereof.

### (1) Operating Example 1

FIG. 4 is a flow chart illustrating a first operating example executed by the controller 11 of the mobile communication terminal 100. It should be noted that this operation, which is implemented as a feature of the multitasking OS, is executed whenever predetermined events (actions) occur. The term "event" refers to an operation etc. whereby, for instance, the display position of a window is altered or a new window is displayed as a result of user input. Moreover, it may be executed periodically at predetermined time intervals irrespective of such events.

First of all, as illustrated in the same figure, the controller 11 identifies the charge scheme of the terminal (Step Sa1). At such time, by referring to the charge information stored in the EEPROM 11d, the controller 11 identifies whether the charge scheme of the terminal is based on the "flat-rate billing system" or on the "usage-based billing system". Once the charge scheme has been identified, the controller 11 uses this information to identify the priority information to be used for reference (Step Sa2). If the charge scheme is based on the "flat-rate billing system", the controller 11 uses the "first priority" as the reference priority information, and if the charge scheme is based on the "usage-based billing system", the controller 11 uses the "second priority" as the reference priority information.

Once the reference priority information has been identified, the controller 11 determines the display state of the windows in the display 14 and identifies windows that are displayed with overlaps (Step Sa3). At such time, the controller 11 makes a determination as to the overlaps of the windows based on the stored window information. Here, both windows that interfere with the display of other windows and windows, whose display is impeded by other windows, are identified by the controller 11 as windows with overlaps. Namely, in case of multiple windows with overlaps, the controller 11 determines that both windows displayed in the foreground and windows displayed in the background are windows with overlaps. It should be noted that cases, wherein three or more windows overlap in a certain area, have similar operation.

Thereafter, the controller 11 determines whether or not the windows identified in Step Sa3 are present and thereby determines whether or not windows with overlaps are present (Step Sa4). If it determines that there are windows displayed with overlaps (Step Sa4: "YES"), the controller 11 identifies applications corresponding to the identified windows and identifies the priorities of the applications (Step Sa5). The controller 11 then determines the priority levels of each window based on the identified priorities. At such time, the controller 11 operates such that the multiple windows with overlaps are assigned higher priority levels if they have higher priorities.

Next, the controller 11 determines whether the display sequence of the overlapping windows differs from the determined priority levels (Step Sa7). The controller 11 makes this determination based on the stored window information. If the display sequence of the overlapping windows differs from the priority levels (Step Sa7: "YES"), the controller 11 re-arranges the display sequence (Step Sa8). Namely, the controller 11 determines the display sequence such that windows with higher priority levels are promoted to the foreground. Subsequently, the controller 11 outputs the corresponding display data.

It should be noted that the controller 11 terminates the process without rearranging the display sequence of the windows if the determinations made in Steps Sa4 and Sa7 are negative (i.e. "NO"). This is due to the fact that, in such a case, the window that is supposed to be displayed in the foremost position is already displayed in the foremost position and there are no windows interfering with its display.

The operation described above will now be explained using specific window display examples. It should be noted that, in the examples below, the priority information is assumed to be as shown in FIG. 2. In addition, the window of "Game A" is referred to as "w1", the window of "Game B" is referred to as "w2", and the window of "Game C" is referred to as "w3".

First of all, consider a case, in which the charge scheme of the mobile communication terminal 100 is based on the "flat-rate billing system". In such a case, the controller 11 identifies the "first priority" as the priority information to be used for reference. Accordingly, as far as the priorities of the windows are concerned, the window w1 of "Game A" has the highest priority and the window w3 of "Game C" has the lowest priority.

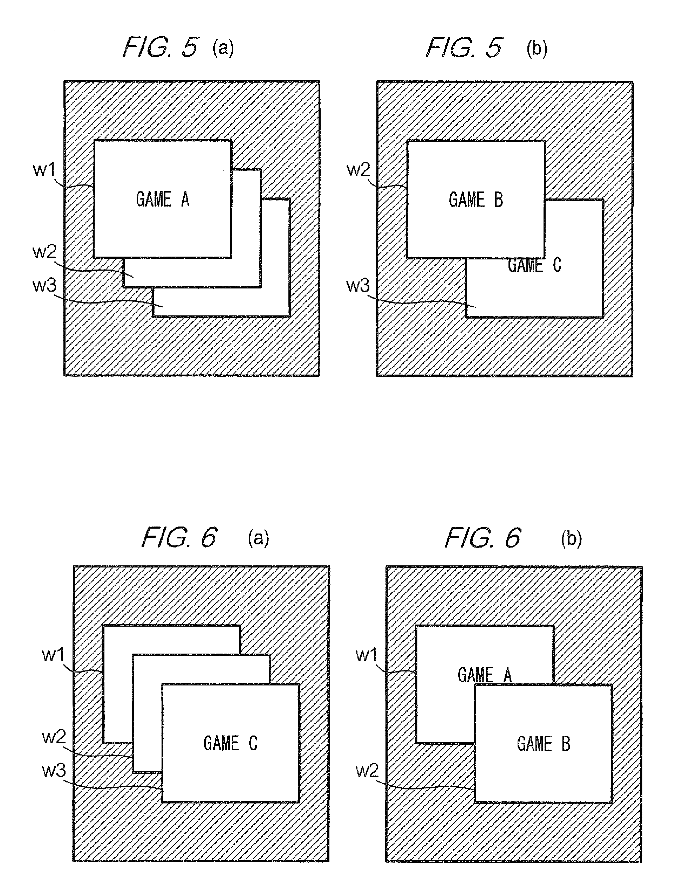

Here, assuming that "Game A", "Game B" and "Game C" are running and their respective windows are mutually overlapped, the controller 11 displays these windows as shown in FIG. 5(a). Namely, the controller 11 exercises display control in such a manner that the window w1 of "Game A" is displayed in the foremost position, the window w2 of "Game B" is displayed next to it, and the window w3 of "Game C" is displayed in the rearmost position. In addition, assuming that, e.g. "Game B" and "Game C" are running and their windows overlap with one another, the controller 11 displays these windows as depicted in FIG. 5(b). Namely, the controller 11 operates such that the window w2 of "Game B", which has a higher priority, is displayed in the foreground, and the window w3 of "Game C", which has a lower priority, is displayed in the background.

Next, consider a case, in which the charge scheme of the mobile communication terminal 100 is based on the "usage-based billing system". In such a case, the controller 11 identifies the "second priority" as the priority information to be used for reference. Accordingly, as far as the priorities of the windows are concerned, the window w3 of "Game C" has the highest priority and window w1 of "Game A" has the lowest priority. In other words, the priorities of the windows at such time are opposite to those of the "flat-rate billing system".

Here, assuming that "Game A", "Game B" and "Game C" are running and their respective windows are mutually overlapped, the controller 11 displays these windows as shown in FIG. 6(a). Namely, the controller 11 exercises display control such that the window w3 of "Game C" is displayed in the foremost position, the window w2 of "Game B" is displayed next to it, and the window w1 of "Game A" is displayed in the rearmost position. In addition, assuming that, e.g. "Game A" and "Game B" are running and their windows are mutually overlapped, the controller 11 displays these windows as shown in FIG. 6(b). Namely, the controller 11 operates such that the window w2 of "Game B", which has a higher priority, is displayed in the foreground, and the window w1 of "Game A", which has a lower priority, is displayed in the background.

By carrying out such operation, the mobile communication terminal 100 of the present exemplary embodiment determines the display priorities of the windows according to conditions relating to telecommunication charges of the terminal and displays the windows in order of the determined priorities. As a result, when the telecommunication charges per unit of communication traffic volume are low, the mobile communication terminal 100 displays and plays back content from windows with richer content (video, audio, etc.) and, on the other hand, when the telecommunication charges per unit of communication traffic volume are higher, the mobile communication terminal 100 displays windows with lower volumes of communication traffic, prompting the use of applications according to the respective different situations. Such operation produces particularly remarkable effects if the process is run in a multitasking mode using a small-size device with limited controls and screen size, such as a cellular telephone.

It should be noted that, in the present exemplary embodiment, the charge information may change while the user is using the mobile communication terminal 100. For example, there is a common cellular phone charge scheme referred to as the "flat-rate usage-based billing system", which behaves as a usage-based billing system up to a prescribed amount of telecommunication charges and then turns into a flat-rate billing system when the amount is exceeded. If the mobile communication terminal 100 is operated under a contract based on such a charge scheme, it may be controlled in such a manner that the windows of applications with smaller volumes of communication traffic are preferentially displayed during the period of increasing telecommunication charges under the usage-based billing system and, on the other hand, the windows of applications with larger volumes of communication traffic are preferentially displayed when the telecommunication charges switch to the flat-rate system.

In order to exercise such display control, the controller 11 needs to recognize the moment in time when the "usage-based billing system" changes to the "flat-rate billing system". Among the configurations used to implement such control there is, for instance, a configuration wherein telecommunication charges are computed and stored starting from the moment when the accrual of telecommunication charges begins in each cycle (e.g. at the beginning of each month) and the controller 11 compares them with the prescribed amount mentioned above. Moreover, this may be a configuration, in which information indicating that the telecommunication charges have reached a prescribed amount is acquired from a node managing telecommunication charges in the mobile communications network.

### (2) Operating Example 2

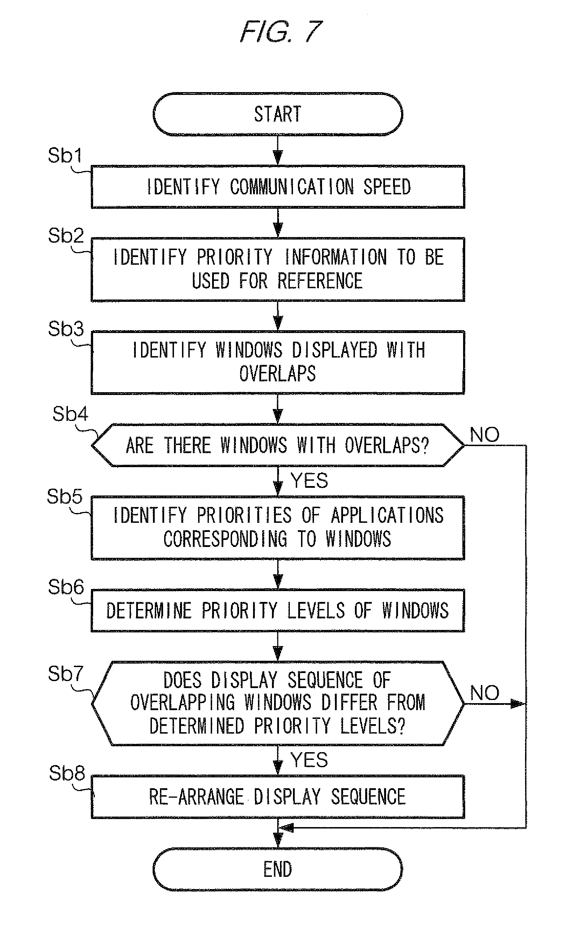

FIG. 7 is a flow chart illustrating a second operating example executed by the controller 11 of the mobile communication terminal 100. It should be noted that this operation has some of the processing in common with the Operating Example 1 described above. Descriptions of such processing are therefore omitted for convenience.

First of all, as illustrated in the same figure, the controller 11 identifies the communication speed of the terminal (Step Sub1). At such time, the controller 11 identifies the volume of communication traffic that can be communicated to/from the mobile communications network per predetermined period of time. As used herein, the term "volume of communication traffic" may refer to the volume of data transmitted by the mobile communication terminal 100 to the mobile communications network, to the volume of data received by the mobile communication terminal 100 from the mobile communications network, or to both.

It should be noted that the controller 11 may be embodied so as to periodically or aperiodically identify the communication speed, store it in the EEPROM 11d and subsequently identify the communication speed as needed by reading it. For example, the communication speed may be computed, for example, whenever the mobile communication terminal 100 switches to different called party (base station, etc.).

Once the communication speed has been identified, the controller 11 identifies the priority information to be used for reference based on the communication speed (Step Sb2). The controller 11 compares the identified communication speed with a predetermined threshold value and, if the communication speed exceeds the threshold value (i.e. if it is faster), the controller 11 uses the "first priority" as the reference priority information, and if the communication speed is equal to, or less than, the threshold value (i.e. if it is slower), the controller 11 uses the "second priority" as the reference priority information.

Thereafter the controller 11 carries out processing similar to that of Operating Example 1. Namely, the processing of Steps Sb3-Sb8 is similar to the processing of Steps Sa3-Sa8 described above. Accordingly, descriptions of the processing starting from Step Sb3 are omitted.

By performing this operation, the mobile communication terminal 100 of the present exemplary embodiment determines the display priority of each window according to conditions relating to a communication speed of the terminal and displays the windows in order of the determined priorities. It should be noted that if the communication speed is faster, the mobile communication terminal 100 determines the priorities in a manner similar to the one used under the "flat-rate billing system", and if the communication speed is slower, the terminal determines the priorities in a manner similar to the one used under the "usage-based billing system". As a result, in a situation where the mobile communication terminal 100 can handle a large volume of communication traffic, the terminal preferentially displays windows involving larger volumes of communication traffic and, on the other hand, in a situation where the communication speed is limited, it can preferentially display windows involving smaller volumes of communication traffic. Such operation produces particularly remarkable effects when used in a small-size device, such as a cellular telephone, whose communication state readily changes when the phone is moved.

### Alternative Embodiments

The present invention can be reduced to practice in forms different from the exemplary embodiments described above. For example, the present invention can be implemented in the following form. Additionally, the alternative embodiments shown below can be combined together as appropriate.

### (1) Alternative Embodiment 1

There are different kinds of conditions relating to communications with the terminal. For example, if the telecommunication charges per predetermined unit of communication traffic volume (e.g. per packet) vary according to the time zone, different priority information can be selected in different time zones. In other words, the windows of applications with larger volumes of communication traffic can be preferentially displayed in time zones with lower telecommunication charges and the windows of applications with smaller volumes of communication traffic can be preferentially displayed in time zones with higher telecommunication charges. In such cases the terminal may be configured such that, along with providing means for identifying time, such as a clock, etc., information representing relationships between time zones and telecommunication charges is stored as communication-related conditions for the terminal, with the terminal using priority information corresponding to the moment of processing as reference information.

Moreover, if the so-called "roaming", which utilizes services from other telecommunication service providers, is available, different priority information can be used according to whether the terminal is roaming or not. For example, the windows of applications with larger volumes of communication traffic can be preferentially displayed if the mobile communication terminal is used domestically and the windows of applications with smaller volumes of communication traffic can be preferentially displayed if the mobile communication terminal is used abroad. This is due to the fact that telecommunication charges are typically higher during roaming. It should be noted that information indicating whether the terminal is roaming or not can be acquired, for instance, from the mobile communications network.

In other words, in the present invention, the relationship between the volume of communication traffic and telecommunication charges depends not only on the contents of the contract signed by the user, but sometimes also on the location of the terminal. Moreover, the relationship between the volume of communication traffic and telecommunication charges can be identified based on information stored in the terminal and can also be determined based on externally acquired information.

In addition, methods used for identifying the speed of communication are not limited to the method of Operating Example 2. For example, communication at higher speeds can be believed to be possible when the mobile communication terminal can utilize a wider frequency band or when the mobile communication terminal is located in specific areas that permit communication at higher speeds. Information identifying such situations can be acquired, for instance, from the mobile communications network.

In addition, it should be noted that the speed of communication can be identified based on the field strength and remaining battery capacity of the terminal.

Moreover, for instance, when a temporary significant increase in the amount of communication is expected (such as during a natural disaster, etc.), information intended to limit communication can be transmitted from the mobile communications network and the display priority of the windows can be determined based on such information. For example, the mobile communication terminal can be adapted to preferentially display the windows of applications with smaller volumes of communication traffic if such information is received.

### (2) Alternative Embodiment 2

The volume of communication traffic handled by an application per predetermined time period can be identified based on actual communication. For example, when certain applications are executed, the volume of communication traffic involved in their execution can be measured and, based on this, the volume of communication traffic handled by each application per predetermined time period can be identified. In such cases, the mobile communication terminal can be configured to compute the above-described priority information based on the magnitude of the thus identified volume of communication traffic and store it in a prescribed storage section (EEPROM, etc.).

### (3) Alternative Embodiment 3

Windows belonging to specific applications can be assigned priorities that are permanently determined irrespective of the above-described priority information. In order to implement such an approach, it may be possible, for instance, to pre-store information designating such windows in the controller and, when such windows overlap with other windows, they can be displayed based on priorities determined irrespective of communication-related conditions. It should be noted that when it is desirable to display the windows of such specific applications in the foremost position, it is sufficient to maximize their priorities in advance.

If there are windows that might create problems as a result of being displayed in the background, such as extremely important messages regarding the operation of the terminal, etc., this approach makes it possible to prevent the display of said windows from being interfered with by other windows.

Additionally, as far as the windows of the specific applications are concerned, similar effects can be produced even when designating priorities determined irrespective of the magnitude of the communication traffic volume.

Moreover, it can be said that this alternative embodiment eliminates the windows of the designated specific applications from consideration when determining priorities. If the multiple windows that include the designated windows overlap at such time, the controller determines the display priority for all the windows except for the designated windows, displays the designated windows in order of the predetermined priority, and displays the rest of the windows in order of priority determined based on the designation information. Moreover, the windows may be designated by the user.

### (4) Alternative Embodiment 4

In the above-described embodiments, a single window was associated with a single application. The present invention, however, does not necessarily imply such a relationship. For example, in case of applications utilizing the MDI (Multiple Document Interface) standard, multiple windows can be displayed for a single application. The present invention can be applied to such an application as long as it is possible to determine the display priority of each respective window. For example, in an application such as the so-called "tab browser", the display priority can be determined based on the identified volume of communication traffic as long as it is possible to identify the volume of communication traffic associated with the display of each respective window

### (5) Alternative Embodiment 5

When determining the display priority of the windows, the controller may determine it based on the frequency and duration of time, during which the windows are displayed. For example, when there are multiple windows exhibiting the same volume of communication traffic during display, the priority of windows with a longer duration or higher frequency of display may be increased. This permits preferential display of windows having a higher probability of use.

### (6) Alternative Embodiment 6

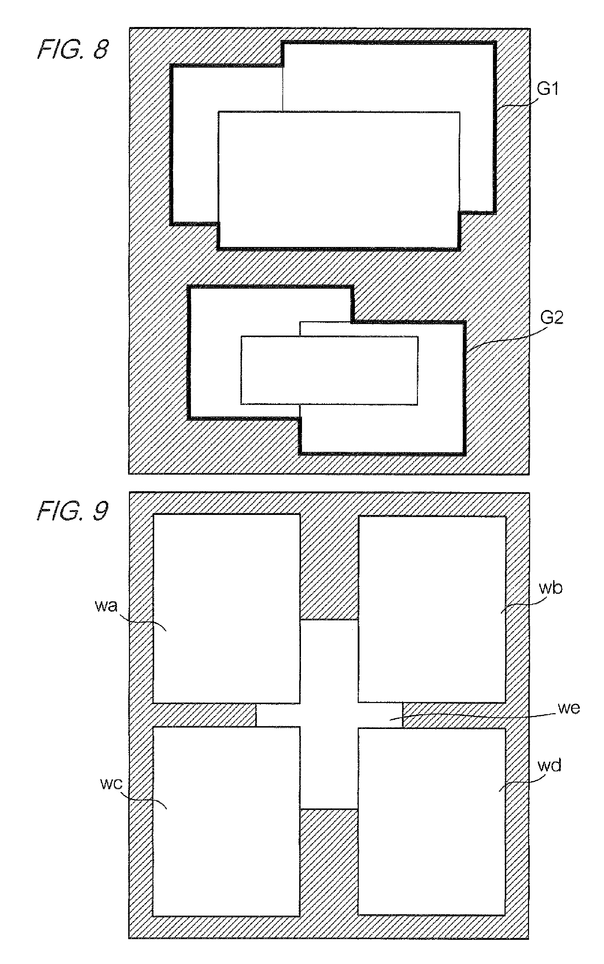

In the present invention, there may be more than one window displayed in the foremost position. For example, as illustrated in the example of FIG. 8, if the windows can be classified into multiple groups, the controller can determine the windows displayed in the foremost position in each one of the respective groups. It should be noted that in this case the term "group" refers to a set of windows contained within an area defined by a single closed contour line. In the example depicted in FIG. 8 the windows can be classified into Group G1 and Group G2. In such a case, the controller can determine the windows displayed in the foremost positions in both groups, i.e. Groups G1 and G2. It should be noted that in this case the foremost window of each group may be an active window. In other words, in the present invention, the display screen may be partitioned into predetermined areas, and the display priority of the windows may be determined in each respective area.

Further, in the present invention, when there are multiple mutually non-overlapping windows, control may be exercised such that all of these windows are displayed in the foremost position. For example, FIG. 9 shows windows wa, wb, wc, and wd. Although there is an overlapping window (we), the windows wa, wb, wc, and wd do not overlap. In such a case, when the priorities of the windows wa, wb, wc, and wd are higher than the priority of window we, all of the windows wa, wb, wc, and wd are displayed in the foremost position.

### (7) Alternative Embodiment 7

In the above-described embodiment, for ease of understanding, the windows undergoing display control were assumed to belong to gaming applications. It is understood, however, that windows belonging to various other applications may be subjected to display control. Moreover, the windows subject to display control may include windows that do not involve communication when they are displayed etc. (in other words, windows displayed etc. based only on data stored in the terminal in advance). Such windows may be set up to be preferentially displayed in the foreground when, for instance, the terminal is out of range, i.e. when it cannot communicate with a mobile communications network.

### (8) Alternative Embodiment 8

In the above-described embodiments priority was determined for all the overlapping windows. It is possible, however, to identify only the window with the highest priority, i.e. the window displayed in the foremost position, perform a re-arrangement while leaving the display sequence of the other windows unchanged.

### (9) Alternative Embodiment 9

While in the above-described embodiments the present invention was applied to a cellular phone, it is possible to apply the present invention to other communication terminals. The present invention is applicable to various communication terminals that display windows, such as PDAs (Personal Digital Assistants) and other communication terminals, personal computers, etc.

### (10) Alternative Embodiment 10

In the above-described embodiments the present invention was implemented as a feature of the OS. The present invention, however, can also be implemented as a standalone application. Moreover, the functionality of the present invention can be added to an existing OS or application in the form of a so-called plug-in. When such a configuration is used, the present invention can be provided as an application program for implementing the above-described functionality on a computer (communication terminal). Such a program can be provided in the form of a program stored on a recording medium such as an optical disk, etc. or provided via a network, such as the Internet, by a predetermined server apparatus.

### (11) Alternative Embodiment 11

It is noted that the configuration of the mobile communication terminal shown in Figs. 1 and 2 is merely an exemplified embodiment of software and hardware implementations. Thus, it is possible to employ other software and hardware implementations adapted to perform window controls of to the present invention described above.

## Claims

1. A communication terminal comprising:
a condition identification section that identifies communication-related conditions for the terminal;
a storage section that stores, for each window displayed on a display, priorities determined according to the conditions;
a window identification section that identifies a window overlapping with another window in screen views displayed on the display;
a determination section that determines the priority levels of screen views for the plurality of windows identified by the window identification section, the determination section determining the priority levels of the plurality of windows based on the priorities stored in the storage section and according to the conditions identified by the condition identification section; and
a display controller that displays windows with a higher priority level, as determined by the determination section, in front of windows with a lower priority level.

2. The communication terminal according to claim 1, wherein:
the condition identification section identifies, as the condition, the volume of communication traffic per predetermined time period, which is available for the terminal; and
the storage section stores, for each one of the windows, priorities corresponding to the volume of communication traffic associated with each one of the views.

3. The communication terminal according to claim 1, wherein:
the condition identification section identifies, as the condition, a relationship between a volume of communication traffic with regard to the terminal and a charge for the volume of communication traffic; and
the storage section stores, for each one of the windows, priorities corresponding to the volume of communication traffic associated with each one of the views.

4. The communication terminal according to claim 2 or 3, further comprising:
a communication traffic volume identification section that identifies, for each one of the windows, the volume of communication traffic associated with each one of the views;
a computation section that computes priorities for each of the conditions based on the volume of communication traffic identified by the communication traffic volume identification section; and
a storage controller that stores the priorities computed by the computation section in the storage section.

5. The communication terminal according to claim 1, further comprising a designation section that designates a certain window, wherein
when the window designated by the designation section is included among the plurality of windows identified by the window identification section, the display controller displays said window in the foremost position.

6. A program that causes a computer to execute the steps of:
identifying communication-related conditions;
acquiring, for each window displayed on a display, priorities determined according to the conditions;
identifying a window overlapping with another window in screen views displayed on the display;
determining the priority level of views for the plurality of identified windows, said function determining the priority levels of the plurality of windows based on the priorities acquired according to the identified conditions; and
displaying windows having a higher determined priority level in front of windows having a lower priority level.
